# NEUE EUROPÄISCHE PATENTSCHRIFT

(11) **EP 1 301 304 B2**
(45) Veröffentlichungstag und Bekanntmachung des Hinweises auf die Entscheidung über den Einspruch: **14.10.2009**
(45) Hinweis auf die Patenterteilung: 14.09.2005
(21) Anmeldenummer: 00951388.8
(22) Anmeldetag: 14.07.2000
(51) Int. Cl.: B23B 31/02

(54) **WERKZEUGHALTER FÜR EIN UM EINE DREHACHSE DREHBARES WERKZEUG, INSBESONDERE EIN BOHR-, FRÄS- ODER REIBWERKZEUG**
TOOL HOLDER FOR A TOOL, ESPECIALLY A BORING, MILLING OR RUBBING TOOL, WHICH CAN BE ROTATED ABOUT A ROTATIONAL AXIS
PORTE-OUTILS DESTINE A UN OUTIL POUVANT ETRE MIS EN ROTATION AUTOUR D'UN AXE DE ROTATION, EN PARTICULIER UN OUTIL DE FORAGE, DE FRAISAGE OU DE FROTTEMENT

(43) Veröffentlichungstag der Anmeldung: 16.04.2003
(73) Patentinhaber: Franz Haimer Maschinenbau KG, 86568 Hollenbach-Igenhausen (DE)
(72) Erfinder: HAIMER, Franz, D-86568 Hollenbach-Igenhausen (DE)
(74) Vertreter: Liska, Horst
(86) Internationale Anmeldenummer: PCT/EP2000/006760
(87) Internationale Veröffentlichungsnummer: WO 2002/005992

(56) Entgegenhaltungen:
- EP-A- 0 566 898
- DE-A- 19 708 983
- DE-A- 19 928 995

## Beschreibung

Die Erfindung betrifft, gemäß dem Oberbegriff von Anspruch 1 bzw. Anspruch 4, einen Werkzeughalter für ein um eine Drehachse drehbares Werkzeug, insbesondere ein Bohr-, Fräs- oder Reibwerkzeug.

Bei rotierenden Hochpräzisionswerkzeugen, wie z. B. Bohrern oder Fräsern, ist eine hohe Rundlaufgenauigkeit erforderlich, um ungleiches Schneiden an den Schnittkanten des Werkzeugs zu vermeiden. Zur rundlaufgenauen Einspannung solcher Werkzeuge ist von der Firma Schunk GmbH & Co. KG ein unter der Bezeichnung "Tribos" vertriebener Werkzeughalter bekannt, der in einer ringförmig geschlossenen Endhülse eines Spannschafts eine zur Rotationsachse zentrische Aufnahmeöffnung zur Aufnahme eines Halteschafts des Werkzeugs aufweist. Die Aufnahmeöffnung besitzt eine polygonale Querschnittsform, an deren Polygonseiten der Innenumfangsmantel der Endhülse Spannflächen zur Preßsitzhalterung des Halteschafts aufweist. Zum Einsetzen oder Abnehmen des Werkzeugs wird in den Eckbereichen des Polygons eine nach radial innen gerichtete Druckkraft auf die Endhülse aufgebracht, durch die der Querschnitt der Aufnahmeöffnung in eine den Preßsitz aufhebende Kreisform gebracht wird. Eine Querschnittsvergrößerung der Aufnahmeöffnung findet hierbei im wesentlichen nicht statt. Vielmehr ist im wesentlichen nur eine Querschnittsverformung zu beobachten. Der Halteschaft des Werkzeugs kann in diesem Zustand leicht eingesetzt bzw. abgenommen werden. Bei Entlastung der Endhülse von der Druckkraft kehrt die Aufnahmeöffnung wieder in ihre polygonale Querschnittsform zurück.

Diese Schunk-Lösung, deren Funktionsweise beispielsweise in einem Prospekt "Tribos-Kraftschrumpftechnik" der Firma Fritz Schunk GmbH & Co. KG, Prospekt-Nr. 9901074-7,5M-9/98 oder in DE 195 21 755 C1 erläutert ist, ist an das Vorhandensein einer polygonalen Querschnittsform der Aufnahmeöffnung gebunden. Dies ist akzeptabel, sofern keine allzu hohen Anforderungen an die Klemmkraft gestellt werden, mit der das Werkzeug in dem Werkzeughalter eingespannt wird. Bei der Schunk-Lösung findet eine Klemmung des Werkzeugs nämlich nur im Bereich der Polygonseiten statt. In den Eckbereichen des Polygons weist der Innenumfangsmantel der Endhülse radialen Abstand vom Halteschaft des Werkzeugs auf, weswegen hier keine Klemmkräfte übertragen werden. In manchen Fällen ist jedoch eine Klemmung des Werkzeugs am gesamten Umfang des Halteschafts erwünscht, um besonders hohe Klemmkräfte übertragen zu können, beispielsweise wenn Werkstücke mit einer hohen Schnittiefe oder mit hohen Schnittkräften bearbeitet werden sollen. Für solche Fälle eignet sich der angesprochene Schunk-Werkzeughalter aufgrund seines Funktionsprinzips nicht.

Aus WO 99/65643 ist ein weiterer Werkzeughalter für ein um eine Drehachse drehbares Werkzeug bekannt, der als Hohlkörper in der Form eines Ringelements ausgebildet ist. Der Hohlkörper besitzt im entlasteten Zustand eine polygonförmige oder ovale Innenkontur und eine etwa kreisförmige Außenkontur, wobei zwischen der Innenkontur und der Außenkontur des Ringelements nierenförmige Hohlräume vorgesehen sind, welche gleichmäßig in Umfangsrichtung verteilt sind. Wenn eine Kraft auf das Ringelement im Bereich der nierenförmigen Hohlräume ausgeübt wird, bewirkt dies eine elastische Verformung des Hohlkörpers, wo-durch dessen Innenkontur eine runde Form annimmt und ein Schaft in das Ringelement eingeschoben oder aus diesem herausgezogen werden kann. WO 99/65643 und korrespondierend dazu DE 198 27 109 C1 und DE 198 34 739 C1 beschreiben allgemein Verbindungssysteme zum lösbaren festen Verbinden zweier Bauteile ohne direkt den Bezug auf eine Verwendung als Werkzeughalter. Insbesondere wird auch eine Ausführungsform beschrieben, bei der der elastisch verformbare Hohlkörper mehrere in Umfangsrichtung sich erstreckende Aussparungen aufweist, die, in Umfangsrichtung gesehen, in ihrem Mittelteil jeweils zu der hier kreisförmigen Innenkontur offen sind.

Der Erfindung liegt demnach das technische Problem zugrunde, einen Werkzeughalter für ein rotierendes Werkzeug, insbesondere ein Bohr-, Fräs- oder Reibwerkzeug, bereitzustellen, der einen breiten Einsatzbereich bietet.

Diese Problemstellung wird durch die in den Ansprüchen 1 und 4 angegebenen Merkmale gelöst.

Bei einem solchen Werkzeughalter werden die Zugspeichen auf Zug belastet, um den durch die Spannflächen definierten Spanndurchmesser des Werkzeughalters zu vergrößern und den Preßsitz des Halteschafts des Werkzeugs - sofern dieses in dem Werkzeughalter eingespannt ist - aufzuheben. Es hat sich gezeigt, daß durch eine derartige Zugbelastung der Zugspeichen elastische Verformungen des Spannschafts erzielbar sind, mit denen nicht nur eine Auslenkung der Spannflächen nach radial außen einhergeht, sondern insgesamt eine Querschnittsvergrößerung der Aufnahmeöffnung feststellbar ist. Die Aufnahmeöffnung hat Kreisquerschnitt, der es erlaubt, den Halteschaft des Werkzeugs am gesamten Umfang zu klemmen und dementsprechend hohe Klemmkräfte zu übertragen. Die durch Zugbelastung der Zugspeichen hervorgerufenen Verformungen des Spannschafts sind reversibel, weshalb bei Entlastung der Zugspeichen die Spannflächen wieder in ihre der Preßpassung des Halteschafts des Werkzeugs entsprechende Ursprungsposition zurückkehren.

Der Spannschaft kann unmittelbar durch eine Arbeitsspindel einer Werkzeugmaschine gebildet sein. Es kann sich bei dem aber auch um einen in die Arbeitsspindel einsetzbaren Werkzeughalter, beispielsweise einen Steilkegel-Werkzeughalter oder einen Hohlschaftkegel-Werkzeughalter, handeln.

Zur Aufweitung der Aufnahmeöffnung ist es denkbar, die Zugspeichen einzeln oder gruppenweise zeitlich nacheinander auf Zug zu belasten. Besonders rasch läßt sich das Einsetzen und Abnehmen des Werkzeugs hingegen durchführen, wenn sämtliche Zugspeichen gleichzeitig auf Zug belastet werden. Die radiale Aufweitung der Aufnahmeöffnung muß nicht bereits unmittelbar zeitgleich mit Beginn der Zugkrafteinleitung in die Zugspeichen einsetzen, sondern kann sich aufgrund von Materialelastizitäten des Spannschafts verzögert einstellen.

Um das Verformungsverhalten des Spannschafts gezielt beeinflussen zu können, ist es sogar denkbar, daß mindestens ein Teil der Zugspeichen unterschiedliche Querschnittsform oder/und Querschnittsgröße besitzt.

Wenn sich die Zugspeichen bei Zugbelastung nach radial außen verlagern, wandern zugleich die Angriffsstellen der Brückenelemente nach radial außen. Dies bewirkt eine Vergrößerung der zwischen den Angriffsstellen gemessenen Sehnenlänge der Brückenelemente. Letztere sind so ausgeführt, daß sie eine solche Vergrößerung ihrer Sehnenlänge gestatten.

Grundsätzlich ist es denkbar, Formationen an dem Spannschaft vorzusehen, die es erlauben, mittels gesonderter Zugkörper, beispielsweise Zuganker, von außen her ziehend an den Zugspeichen anzugreifen. Dies wäre jedoch konstruktiv vergleichsweise aufwendig. Es hat sich nun gezeigt, daß zur Einleitung von Zugkräften in die Zugspeichen auch die Brückenelemente herangezogen werden können. Durch geeignete Belastung der Brückenelemente können Verformungen des Spannschafts bewirkt werden, in deren Folge die Zugspeichen nach radial außen gezogen werden. Zumindest ein Teil der Brückenelemente und deren Angriffsstellen an den Zugspeichen kann derart gestaltet sein, daß durch Einleitung einer Sehnenlängungskraft, insbesondere in Form einer im wesentlichen nach radial innen gerichteten Druckkraft, in die Brückenelemente die Zugspeichen auf Zug belastbar sind. Die in die Brückenelemente eingeleitete Sehnenlängungskraft verformt die Brückenelemente in solcher Weise, daß als Reaktion resultierende Zugkräfte von den Brückenelementen auf die Zugspeichen übertragen werden, die eine Aufhebung des Preßsitzes bewirken. Damit einher geht eine Vergrößerung der Sehnenlänge der Brückenelemente.

Wie bei den Zugspeichen ist auch bei den Brückenelementen grundsätzlich denkbar, daß mindestens ein Teil der Brückenelemente unterschiedliche Querschnittsgröße oder/und Querschnittsform besitzt.

Eine besonders einfache Lösung kann darin bestehen, daß mindestens ein Teil der Brückenelemente als zur Drehachse hin konkav gekrümmte Membranen ausgebildet ist, welche durch annähernd radiale Druckbelastung abflachbar sind. Das Flachdrücken der Membranen zieht die Zugspeichen unter Aufhebung des Preßsitzes radial auseinander.

Die Krümmung der Membranen kann geringer als die eines zur Drehachse zentrischen Kreisbogens sein, welcher durch die Angriffsstellen der Membranen an den Zugspeichen hindurchgeht. Hierdurch können günstige Kraftübertragungsverhältnisse zwischen den Brückenelementen und den Zugspeichen erreicht werden.

Die Membranen können einstückig mit den Zugspeichen verbunden sein. Denkbar ist aber auch, daß die Membranen als gesonderte Einsetzteile ausgebildet sind, welche in Aufnahmekammern des endseitigen Schaftbereichs des Spannschafts unverlierbar gehalten sind.

Die Sehnenlängungskraft kann erfindungsgemäß dadurch auf die Brückenelemente aufgebracht werden, daß der endseitige Schaftbereich des Spannschafts ein Druckkammersystem enthält, welches zur Einleitung der Sehnenlängungskraft in die Brückenelemente an eine insbesondere hydraulische Druckmittelversorgung anschließbar ist. Durch das Druckmittel werden die Druckkammern des Druckkammersystems aufgespreizt. Diese Aufspreizung bewirkt elastische Verformungen der die Druckkammern begrenzenden Materialbereiche des Spannschafts, die zur Belastung der Brückenelemente ausgenutzt werden können. Besonders wirksam läßt sich die Aufspreizung der Druckkammern nutzen, wenn das Druckkammersystem wenigstens teilweise von den Brückenelementen begrenzt ist.

Wenngleich hinsichtlich der Zahl der Zugspeichen an sich keinerlei Beschränkungen bestehen, haben sich bei denjenigen Ausführungsformen, bei denen durch Krafteinleitung in die Brückenelemente die Zugbelastung der Zugspeichen erreicht wird, drei, vier oder fünf in Umfangsrichtung verteilte Zugspeichen als günstig erwiesen.

Alternativ zur Krafteinleitung in die Brückenelemente ist es erfindungsgemäß möglich, durch Erzeugung mechanischer Wärmespannungen in dem Spannschaft die gewünschte Zugbelastung der Zugspeichen zu erzielen. Die Erfindung sieht demgemäß vor, daß die Brückenelemente Teil eines die Zugspeichen umschließenden, zugfest mit diesen insbesondere einstückig verbundenen Zugrings sind und daß dem Werkzeughalter eine Heizeinrichtung zugeordnet ist, mittels welcher der Zugring zur Zugbelastung der Zugspeichen thermisch radial aufweitbar ist. Es hat sich gezeigt, daß bei rascher und kurzzeitiger Erhitzung des Zugrings radiale Temperaturdifferenzen und in deren Folge mechanische Wärmespannungen zwischen dem Zugring und den Zugspeichen auftreten, welche die Zugspeichen nach radial außen ziehen und eine Durchmesservergrößerung der Aufnahmeöffnung bewirken. Die Wärmeeinleitung durch die Heizeinrichtung kann gleichmäßig über den gesamten Umfang des Spannschafts erfolgen. Denkbar ist auch, die Wärmeeinleitung lokal zu konzentrieren, insbesondere vorrangig auf die Bereiche zwischen den Zugspeichen.

Die entstehenden Zugkräfte auf die Zugspeichen sind besonders stark, wenn thermische Barrieren eine Erwärmung radial innerer Bereiche des Spannschafts verhindern oder zumindest einschränken. Zur Hemmung des Wärmeflusses zu den radial inneren Bereichen des Spannschafts können in Umfangsrichtung zwischen zumindest einem Teil der Zugspeichen liegende Bereiche des Zugrings durch Isolierkammern von radial inneren Bereichen des endseitigen Schaftbereichs des Spannschafts thermisch getrennt sein. Um eine zusätzliche Kühlung zu erzielen, können die Isolierkammern zumindest beim Einsetzen oder bei der Abnahme des Werkzeugs sogar mit einem Kühlmittel gefüllt werden oder eine Zwangsluftströmung in ihnen erzeugt werden.

Die radiale Auseinanderspreizung der Spannflächen kann dadurch erleichtert werden, daß ein die Spannflächen bildender radial innerer Umfangsbereich des Spannschafts in mehrere voneinander getrennte Umfangssegmente aufgeteilt ist, von denen jedes mit je mindestens einer Zugspeiche verbunden ist.

Konstruktiv einfach kann der endseitige Schaftbereich des Spannschafts von einer ringförmig geschlossenen, insbesondere einstückigen Endhülse gebildet sein, deren Innenumfangsmantel die Spannflächen bildet. Zur Bildung der Zugspeichen kann dabei in Umfangsrichtung verteilt eine Mehrzahl zumindest angenähert axial sich erstreckender, zum Außenumfangsmantel der Endhülse radial insbesondere geschlossener Ausnehmungen in die Endhülse eingearbeitet sein. Die in Umfangsrichtung zwischen den Ausnehmungen verbleibenden Materialstege der Endhülse bilden dann die Zugspeichen.

Die Ausbildung der Zugspeichen in der Endhülse ist besonders einfach zu bewerkstelligen, wenn die Endhülse gesondert von einem Grundkörper des Spannschafts hergestellt und fest mit diesem verbunden ist. Die Endhülse kann so von beiden axialen Stirnseiten her bearbeitet werden.

Im Rotationsbetrieb des Werkzeughalters treten Fliehkräfte auf. Diese wirken naturgemäß auf alle Bereiche des Spannschafts, also auch auf die Zugspeichen und Brückenelemente. Die Fliehkräfte versuchen, die Zugspeichen nach radial außen zu verlagern, wodurch die Aufnahmeöffnung radial aufgeweitet werden würde. Es kann dann die Gefahr bestehen, daß der Preßsitz des Halteschafts des Werkzeugs in der Aufnahmeöffnung fliehkraftbedingt schwächer wird und das Werkzeug schlimmstenfalls sogar verlorengeht. Es hat sich nun gezeigt, daß bei der erfindungsgemäßen Lösung die Brückenelemente bei geeigneter Gestaltung einer derartigen Abschwächung der Klemmung des Halteschafts des Werkzeugs entgegenwirken können. Es ist nämlich möglich, die Brückenelemente so zu gestalten, daß von ihnen im Rotationsbetrieb des Werkzeughalters Druckkräfte auf die Zugspeichen ausgeübt werden, welche das Bestreben der Zugspeichen, nach radial außen zu wandern, wenigstens teilweise kompensieren. Sogar eine Überkompensation ist möglich, in dem Sinne, daß sich eine fliehkraftbedingte Verstärkung des Preßsitzes des Halteschafts des Werkzeugs einstellt. Demgemäß sieht eine weitere Weiterbildung der Erfindung vor, daß die Brückenelemente als Fliehgewichtselemente ausgebildet sind, welche bei Rotation des Spannschafts um die Drehachse unter Zentrifugalkrafteinfluß eine der Fliehtendenz der Zugspeichen entgegenwirkende, im wesentlichen nach radial innen gerichtete Druckkraft auf die Zugspeichen ausüben. Dabei ist insbesondere denkbar, daß die Fliehgewichtselemente dazu ausgebildet sind, bei Rotation des Spannschafts um die Drehachse unter Zentrifugalkrafteinfluß eine den Preßsitz des Halteschafts des Werkzeugs verstärkende Druckkraft auf die Zugspeichen auszuüben. Die Fliehgewichtselemente können z. B. so gestaltet sein, daß sie in ihren annähernd mittig zwischen den Zugspeichen liegenden Bereichen besonders hohen Zentrifugalkräften ausgesetzt sind, beispielsweise indem sie dort Verdickungen aufweisen oder Zusatzgewichte tragen.

Die wenigstens teilweise Kompensation der Fliehtendenz der Zugspeichen durch die Brückenelemente ist nicht nur bei solchen Ausführungsformen denkbar, die auf dem Prinzip der äußeren Krafteinleitung in die Brückenelemente beruhen, sondern auch bei solchen Ausführungsformen, deren Aufnahmeöffnung thermisch aufweitbar ist.

Die Erfindung wird im folgenden anhand der beigefügten Zeichnung näher erläutert. Es stellen dar:
- Fig. 1: einen Axiallängsschnitt durch einen Werkzeughalters, auf dem die Erfindung aufbaut,
- Fig. 2: einen Axialquerschnitt entlang der Linie II-II der Fig. 1 im Normalzustand des Werkzeughalters,
- Fig. 3: eine Ansicht entsprechend Fig. 2, jedoch im druckbelasteten Zustand des Werkzeughalters,
- Fig. 4-8,10 und 11: Querschnittsansichten ähnlich den Fig. 2 und 3 bei einer Variante des Werkzeughalters, auf dem die Erfindung aufbaut, und
- Fig. 9 und 12-16: Querschnittsansichten ähnlich Fig. 2 bei Varianten erfindungsgemäßer Werkzeughalter.

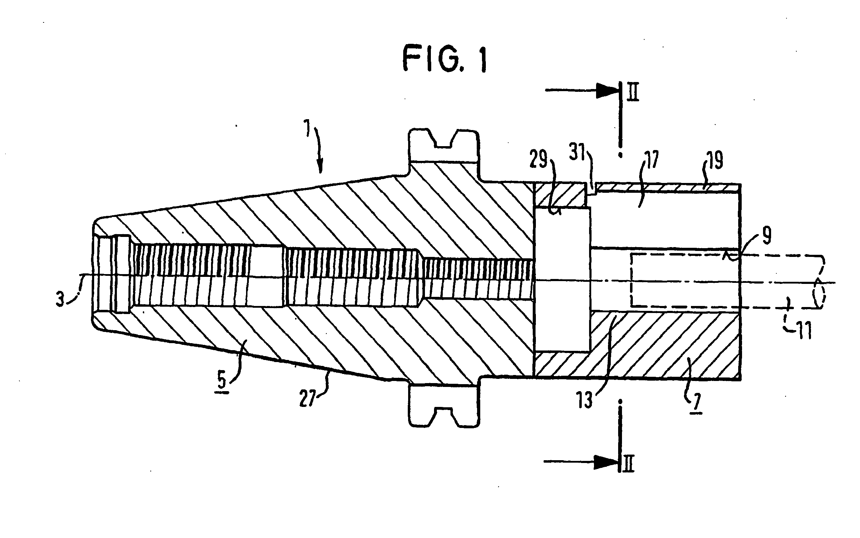

Die Fig. 1 bis 3 zeigen einen Steilkegel-Werkzeughalter mit einem Spannschaft 1, der an einem werkzeugfemen Ende einen zu seiner Drehachse 3 zentrischen Steilkegel 5 aufweist, mit dem er in eine komplementäre Steilkegelaufnahme einer nicht näher dargestellten, gleichachsig zur Drehachse 3 rotierenden Arbeitsspindel einer Werkzeugmaschine, insbesondere einer Fräs- oder Bohrmaschine, drehfest einsetzbar ist. An einem werkzeugnahen Ende ist der Spannschaft 1 mit einer ringförmig geschlossenen Endhülse 7 ausgeführt, die eine zur Drehachse 3 zentrische Aufnahmeöffnung 9 zur Preßsitzhalterung eines gestrichelt angedeuteten Halteschafts 11 eines rotierenden Werkzeugs, insbesondere eines Bohr- oder Fräswerkzeugs, enthält. Der Hatteschaft 11 kann zylindrisch oder konisch ausgebildet sein; die Endhülse 7 hat eine hierzu komplementäre Innenmantelform mit Passungsmaßen, die den in die Aufnahmeöffnung 9 eingreifenden Bereich des Halteschafts 11 im Preßsitz halten.

Um den Halteschaft 11 aus der Aufnahmeöffnung 9 entnehmen oder in diese einführen zu können, weist die Endhülse 7 in Umfangsrichtung gleichmäßig verteilt mehrere, im dargestellten Beispielfall drei, etwa axial sich erstreckende Zugspeichen 13 auf, die in einem achsnormalen Schnitt betrachtet sich im wesentlichen radial erstrecken und radial innen in einen ringartig geschlossenen, mit seinem Innenumfangsmantel die Aufnahmeöffnung 9 begrenzenden Hülsenbereich 15 einstückig übergehen. Wie nachfolgend noch erläutert wird, kann durch radiale Zugbelastung der Zugspeichen 13 der Hülsenbereich 15 und damit der Durchmesser der Aufnahmeöffnung 9 so weit radial geweitet werden, daß der Halteschaft 11 des Werkzeugs aus seinem Preßsitz befreit und aus der Aufnahmeöffnung 9 entnommen bzw. in diese eingesteckt werden kann.

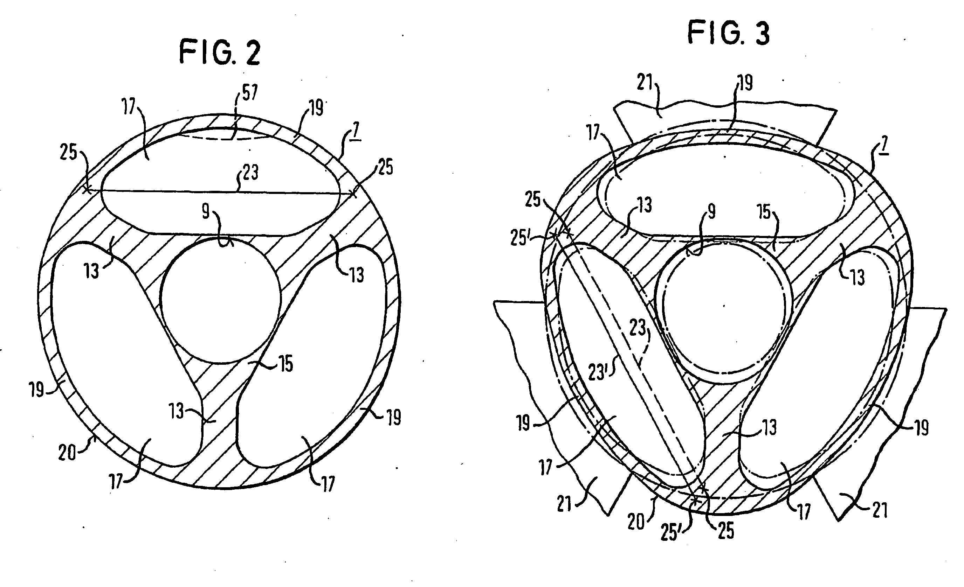

Wie insbesondere in den Fig. 2 und 3 zu erkennen ist, sind zur Ausbildung der Zugspeichen 13 mehrere Hohlkammern 17 etwa axial in die Endhülse 7 eingearbeitet, wobei die in Umfangsrichtung zwischen den Hohlkammern 17 Verbleibenden Materialstege die Zugspeichen 13 bilden. Die im Axialquerschnitt vollständig vom Material der Endhülse 7 umschlossenen Hohlkammern 17 sind nach radial außen hin von kreisbogenförmig gekrümmten, membranartigen Brückenelementen 19 begrenzt, welche jeweils den Umfangsabstand zwischen paarweise benachbarten Zugspeichen 13 überbrücken. Sie sind Teil eines radial äußeren Ringbereichs 20 der Endhülse 7, in den die Zugspeichen 13 einstückig übergehen. Die Brückenelemente 19 sind nach radial innen hin flexibel auslenkbar. Eine nach radial innen gerichtete Druckkraft auf die Brückenelemente 19 verformt dieselben im Sinne einer Abflachung. Als Folge entstehen in den Zugspeichen 13 Kräfte, die eine nach radial außen gerichtete, ziehend an den Zugspeichen 13 arigreifende Komponente enthalten. Diese Zugbelastung der Zugspeichen 13 führt zur radialen Aufweitung der Aufnahmeöffnung 9.

Fig. 2 zeigt die Verhältnisse vor dem Anlegen einer Druckkraft an die Brückenelemente 19. Die Aufnahmeöffnung 9 besitzt hierbei einen den Preßsitz des Halteschafts 11 ermöglichenden Durchmesser. Zur Durchmesservergrößerung der Aufnahmeöffnung 9 wird die angesprochene Druckbelastung auf die Brückenelemente 19 aufgebracht. In Fig. 3 sind hierzu von radial außen gegen die Brückenelemente 19 herangefahrene Spannbacken 21 einer im übrigen nicht näher dargestellten Spannvorrichtung erkennbar, in welche der Werkzeughalter zum Einsetzen und Abnehmen des Werkzeugs eingespannt wird. Durch das Flachdrücken der Brückenelemente 19 nimmt der Außenumfangsmantel der Endhülse 7 eine angenähert polygonale Querschnittsform an. Dabei werden die Zugspeichen 13 nach radial außen gezogen, mit der Folge, daß sich der radial innere Hülsenbereich 15 um ein die Preßpassung aufhebendes Maß radial aufweitet. Dieser Verformungszustand der Endhülse 7 ist in Fig. 3 mit durchgezogenen Linien gezeigt. Strichpunktiert ist in dieser Figur die ursprüngliche Kontur der unverformten, das Werkzeug im Preßsitz klemmenden Endhülse 7 eingezeichnet. Die radiale Aufweitung der Aufnahmeöffnung 9 bewegt sich in der Praxis beispielsweise in der Größenordnung von einigen 10 µm, was genügt, um die Preßpassung aufzuheben. In Fig. 3 ist der Unterschied zwischen unverformter und verformter Endhülse aus Veranschaulichungsgründen übertrieben dargestellt. Die Deformierung der Endhülse 7 bei Druckbelastung der Brückenelemente 19 findet im elastischen Bereich statt, weswegen bei Zurückbewegung der Spannbacken 21 die Endhülse 7 in ihren Ursprungszustand zurückkehrt und sich der radial innere Hülsenbereich 15 wieder auf sein ursprüngliches Maß einengt.

Den Brückenelementen 19 kann jeweils eine Sehne zugeordnet werden, welche sich zwischen den Verbindungsbereichen des jeweiligen Brückenelements 19 mit den zugehörigen Zugspeichen 13 erstreckt. In Fig. 2 ist eine solche Sehne für das dortige obere Brückenelement 19 eingezeichnet. Die Sehne ist mit 23 bezeichnet. Sie verbindet zwei virtuelle Angriffspunkte 25 des Brückenelements 19 an den zugehörigen Zugspeichen 13. Es versteht sich, daß wegen des einstückigen Übergangs der Brückenelemente 19 in die Zugspeichen 13 keine eindeutig lokalisierten Angriffspunkte der Brückenelemente 19 an den Zugspeichen 13 angegeben werden können, sondern daß vielmehr von einem Angriffsbereich auszugehen ist. Der Einfachheit halber wird jedoch in Fig. 2 der idealisierte Fall zweier definierter Angriffspunkte 25 betrachtet.

Wenn sich die Brückenelemente 19 infolge der Belastung durch die Spannbacken 21 flach strecken und hierdurch die Zugspeichen 13 nach radial außen wandern, verlagern sich zugleich die Angriffspunkte 25 nach radial auswärts. In Fig. 3 sind die verlagerten Angriffspunkte und die zwischen ihnen gezogene Sehne eingezeichnet. Sie sind dort mit 25' bzw. 23' bezeichnet. Zum Vergleich ist außerdem mit gestrichelter Linie die im unverformten Zustand der Endhülse 7 erhaltene Sehne 23 mit ihren Angriffspunkten 25 eingezeichnet. Man erkennt, daß mit der radialen Aufweitung der Aufnahmeöffnung 9 eine Vergrößerung der Sehnenlänge einhergeht. Diese Sehnenlängung ist charakteristisch für den zur Aufhebung des Preßsitzes führenden Verformungsvorgang der Endhülse 7.

Zur leichteren Ausbildung der Zugspeichen 13 und der Brückenelemente 19 ist die Endhülse 7 ein gesondert hergestelltes Bauteil, in das die Hohlkammern 17 von einer oder beiden axialen Seiten her eingearbeitet werden können, beispielsweise durch Bohren oder Erodieren. Die so vorbereitete Endhülse 7 wird mit einem Grundkörper 27 des Spannschafts 1, etwa durch Reibschweißen, fest verbunden. In ihrem werkzeugfernen axialen Endbereich kann die Endhülse 7 zudem eine den Innendurchmesser vergrößernde Freidrehung 29 aufweisen, welche die Bearbeitung der Endhülse 7 im radial inneren Bereich erleichtert. Um die Flexibilität der Membranen 19 zu erhöhen, können außerdem in axialem Abstand vom werkzeugnahen Hülsenende Freischnittschlitze 31 in die Endhülse 7 eingearbeitet werden, die in Umfangsrichtung längs der Membranen 19 verlaufen. Die Membranen 19 sind so an beiden ihrer axialen Ränder frei beweglich.

In den weiteren Figuren sind Werkzeughalter gezeigt, bei denen gleiche oder gleichwirkende Komponenten mit gleichen Bezugszeichen wie in den Fig. 1 bis 3 versehen sind, jedoch ergänzt um einen kleinen Buchstaben. Zur Vermeidung von Wiederholungen wird im folgenden im wesentlichen lediglich auf Unterschiede zu dem zuvor beschriebenen Werkzeughaltern eingegangen.

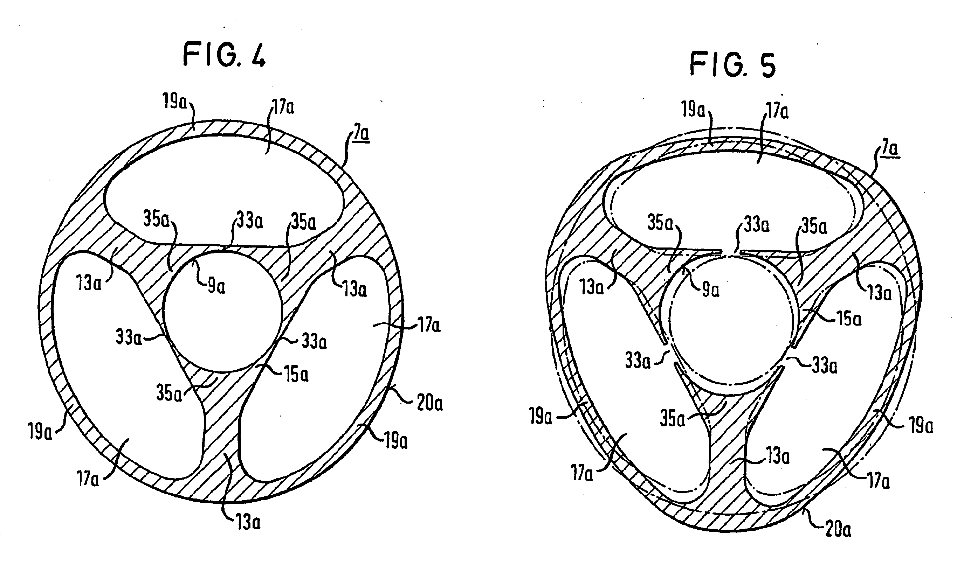

Die Fig. 4 und 5 zeigen eine Variante, die sich von dem zuvor erläuterten Werkzeughaltern lediglich dadurch unterscheidet, daß der radial innere Hülsenbereich 15a durch mehrere Trennschnitte 33a in seinem dünnwandigen Bereich zwischen den Hohlkammern 17a und der Aufnahmeöffnung 9a in mehrere Umfangssegmente 35a unterteilt ist. Jedes der Umfangssegmente 35a hängt an je einer der Zugspeichen 13a. Durch die Trennschnitte 33a wird radial innen eine mechanische Entkopplung der Zugspeichen 13a voneinander erreicht. Hierdurch kann die Aufnahmeöffnung 9a mit geringerem Kraftaufwand aufgeweitet werden. Während Fig. 4 den unbelasteten Zustand der Endhülse 7a zeigt, in dem die Segmente 35a im Bereich der Trennschnitte 33a aneinanderstoßen können, zeigt Fig. 5 den verformten Zustand der Endhülse 7 mit der aufgeweiteten Aufnahmeöffnung 9a. In diesem Zustand haben sich die Trennschnitte 33a zu vergleichsweise großen Spalten geweitet.

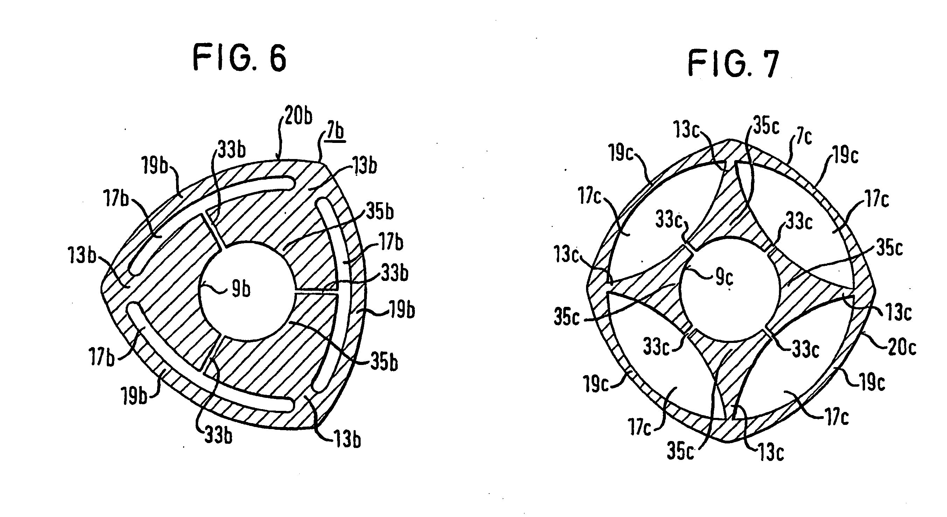

Fig. 6 zeigt eine Variante, bei der die Endhülse 7b auch im unverformten Zustand eine von einer Kreisform abweichende Außenumfangskontur besitzt. Sie besitzt einen angenähert polygonalen Querschnitt mit drei Eckbereichen, wobei die Membranen 19b im Bereich der Polygonseiten liegen. Im Vergleich zu den vorherigen Ausführungsbeispielen ist die Krümmung der Membranen 19b geringer. Die leicht abgeflachte Form der Membranen 19b führt zu besonders günstigen Kräfteverhältnissen, was die Umsetzung der in die Membranen 19b eingeleiteten Kräfte in eine Zugbelastung der Zugspeichen 13b anbelangt.

Die Hohlkammern 17b sind bei der Variante der Fig. 6 als bananenartig gekrümmte, in Umfangsrichtung längliche Schlitze ausgebildet. Durch Druckbelastung der Membranen 19b ist jedoch die gleiche Zugwirkung auf die Zugspeichen 13b und die radial inneren Umfangssegmente 35b wie bei den vorstehenden Werkzeughaltern erzielbar.

Fig. 7 zeigt eine Variante mit vier in Umfangsrichtung verteilten Zugspeichen 13c. Entsprechend sind auch vier Membranen 19c vorgesehen. Wie bei dem Werkzeughalter der Fig. 6 sind die Membranen 19c schwächer gekrümmt als eine gedachte, die Zugspeichen 13c zentrisch zur Drehachse umschließende Kreislinie.

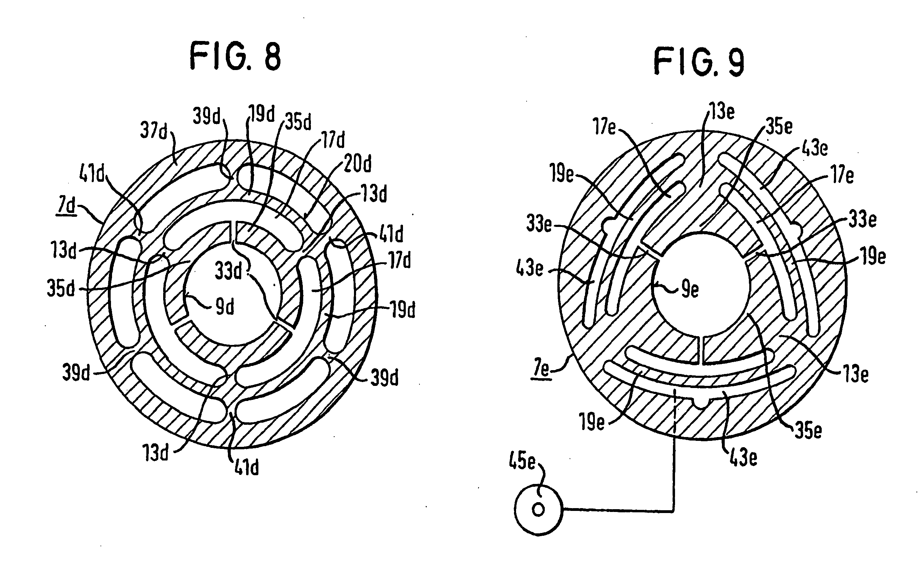

Fig. 8 zeigt eine Variante, bei der die Endhülse 7d als integralen Bestandteil einen weiteren Ringbereich 37d aufweist, welcher den Ringbereich 20d in radialem Abstand umschließt. Die beiden Ringbereiche 20d, 37d sind durch Druckstege 39d miteinander verbunden, welche in Umfangsrichtung im wesentlichen mittig an den Membranen 19d angreifen. In radialer Verlängerung der Zugspeichen 13d sind weitere Verbindungsstege 41d zwischen dem Ringbereich 37d und dem Ringbereich 20d vorgesehen. Zur radialen Aufweitung der Aufnahmeöffnung wird der Ringbereich 37d im Umfangsbereich der Druckstege 39d beispielsweise mittels Spannbacken, wie sie in Fig. 3 gezeigt sind, zusammengedrückt. Der Ringbereich 37d kann hierbei vergleichsweise großflächig belastet werden, um die Flächenpressung in zulässigen Grenzen zu halten. Die Druckstege 39d bewirken eine Fokussierung der eingeleiteten Kraft auf die in Umfangsrichtung mittleren Bereiche der Membranen 19d. Hierdurch wird eine gleichmäßige Verteilung der eingeleiteten Kräfte auf das mit den Membranen 19d jeweils verbundene Paar von Zugspeichen 13d erreicht, selbst wenn die Spannbacken in Umfangsrichtung nicht bezüglich der Druckstege 39d zentriert gegen den äußeren Ring 37d gedrückt werden.

Bei der erfindungsgemäßen Variante der Fig. 9 enthält die Endhülse 7e zur Krafteinleitung in die Membranen 19e ein internes System von Druckkammern 43e, welche an eine in aller Regel hydraulische Druckmittelquelle 45e angeschlossen sind. Zur Verbindung der Druckkammern 43e mit der Druckmittelquelle 45e kann in dem axialen Verbindungsbereich zwischen der Endhülse 7e und dem Grundkörper des Spannschafts (vgl. Fig. 1) ein ringförmig geschlossener Verteilerkanal ausgebildet sein, welcher mit den Druckkammern 43e kommuniziert und zu einen Druckmitteleingabeanschluß des Spannschafts führt, an dem die Druckmittelquelle 45e anschließbar ist. Selbstverständlich sind auch andere Gestaltungen der Druckmittelzufuhr denkbar.

Die Druckkammern 43e grenzen radial außen unmittelbar an die Membranen 19e an. Bei Druckmitteleinleitung in die Druckkammern 43e spreizen sich diese im wesentlichen in radialer Richtung auf, wodurch die Membranen 19e nach radial innen im Sinne einer Abflachung ausgelenkt werden und die bereits eingehend erläuterte Zugbelastung auf die Zugspeichen 13e ausüben.

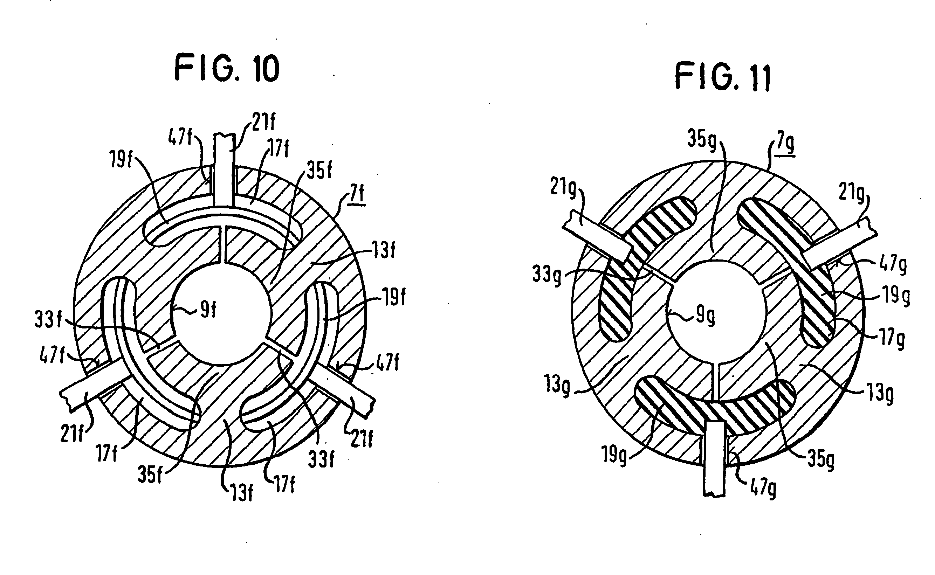

Bei der Variante der Fig. 10 sind Membranen 19f vorgesehen, die nicht integraler Bestandteil der Endhülse 7f sind, sondern als gesonderte Einlegeteile ausgebildet sind, welche in die Hohlkammern 17f der Endhülse 7f eingesetzt sind. Die Membranen 19f sind beispielsweise von Federstahlstücken gebildet, welche sich an den in Umfangsrichtung gegenüberliegenden Randbereichen der Hohlkammern 17f abstützen. Die Hohlkammern 17f sind von radial außen her durch Durchbrüche 47f zugänglich, welche vom Außenumfangsmantel der Endhülse 7f bis zu den Hohlkammern 17f durchgehen. Durch diese Durchbrüche 47f können Druckstempel 21f eingeführt werden, mittels welcher die Federstahlmembranen 19f zur Aufweitung der Aufnahmeöffnung 9f nach radial innen gedrückt werden können.

Fig. 11 zeigt eine Variante, welche sich von den vorstehenden Werkzeughaltern dadurch unterscheidet, daß als Brückenelemente keine dünnwandigen Membranen vorgesehen sind, sondern gummielastische Körper 19g, beispielsweise aus Hartgummi, welche in den Kammern 17g der Endhülse 7g aufgenommen sind. Die gummielastischen Körper 19g können vorgefertigt und in die Kammern 17g eingepreßt sein. Bevorzugt werden sie jedoch in den Kammern 17g durch Ausgießen derselben hergestellt.

Auch bei dem Werkzeughalter der Fig. 11 ist durch Eindrücken von Druckstempeln 21g in die gummielastischen Körper 19g eine radiale Aufweitung der Aufnahmeöffnung 9g erzielbar. Die durch die Druckstempel 21g mittig komprimierten gummielastischen Körper 19g versuchen, dieser Druckbelastung durch eine Ausdehnung in Umfangsrichtung zu entgehen. Hierbei üben sie auf die in Umfangsrichtung gegenüberliegenden Wandbereiche der Kammern 17g Kräfte aus, die bei geeigneter Formgebung der gummielastischen Körper 19g und der Kammern 17g in einer Zugbelastung der Zugspeichen 13g resultieren.

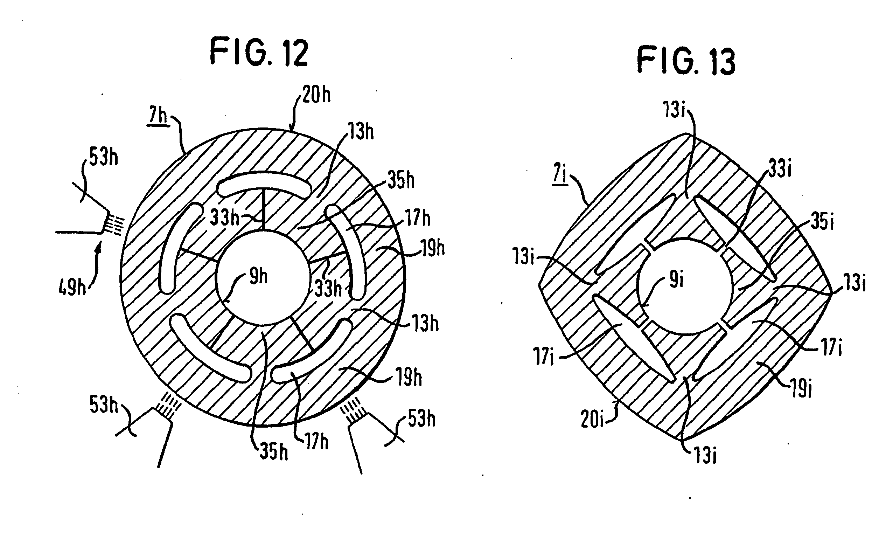

Die Fig. 12 bis 16 zeigen erfindungsgemäße Varianten, bei denen die Zugspeichen nicht durch äußere Krafteinleitung in die Brückenelemente nach radial außen gezogen werden, sondern eine thermische Aufweitung der Aufnahmeöffnung durch Wärmeeinleitung in die Endhülse erzielt wird. Hierzu ist in Fig. 12 eine Heizeinrichtung 49h schematisch angedeutet, die in einen den Außenumfangsmantel der Endhülse 7h bildenden, vergleichsweise dickwandigen Ringbereich 20h der Endhülse 7h kurzzeitig und rasch eine solche Wärmemenge einleitet, daß mechanische Wärmespannungen in der Endhülse 7h entstehen, welche die Zugspeichen 13h nach radial außen ziehen. Die Heizeinrichtung 49h kann gleichmäßig über den Umfang der Endhülse 7h verteilt Wärme in diese einleiten. Es kann auch ausreichend sein, wenn die Heizeinrichtung 49h ihre Wärmeeinleitung im wesentlichen auf diejenigen Umfangsbereiche der Endhülse 7h beschränkt, die sich zwischen den Zugspeichen 13h befinden. Dementsprechend sind in Fig. 12 Heizdüsen 53h angedeutet, die in gegenseitigem Abstand um die Endhülse 7h verteilt sind. Die Heizdüsen 53h können beispielsweise Warmluft oder heißen Dampf ausstoßen. Selbstverständlich können anstelle solcher Heizdüsen andere Heizaggregate verwendet werden, beispielsweise Induktionsspulen.

Die Hohlkammern 17h sorgen für eine thermische Isolierung des Ringbereichs 20h gegenüber den radial inneren Bereichen der Endhülse 7h, so daß diese radial inneren Bereiche der Endhülse 7h vor Erwärmung gut geschützt sind und entsprechend große mechanische Wärmespannungen entstehen können. Die Isolierwirkung der Hohlkammern 17h kann sogar durch eine Kühlmittelfüllung oder eine kühlende Luftzirkulation in den Hohlkammern 17h gefördert werden.

Auch die thermisch bedingte Aufweitung der Endhülse 7h ist reversibel. Nach Beendigung der Wärmeeinleitung engt sich die Aufnahmeöffnung 9h deshalb wieder auf ihr Preßpassungsmaß ein.

Während Fig. 12 eine Variante mit kreisförmiger Außenumfangskontur der Endhülse 7h und mit fünf Zugspeichen 13h zeigt, ist in Fig. 13 eine Variante mit annähernd polygonaler, nämlich viereckiger Außenumfangskontur der Endhülse 13i und mit vier Zugspeichen 13i dargestellt. Die Kammern 17i des Ausführungsbeispiels der Fig. 13 sind als in einem achsnormalen Querschnitt betrachtet längliche, gewünschtenfalls ovale Schlitze ausgebildet, welche längs der Polygonseiten angeordnet sind.

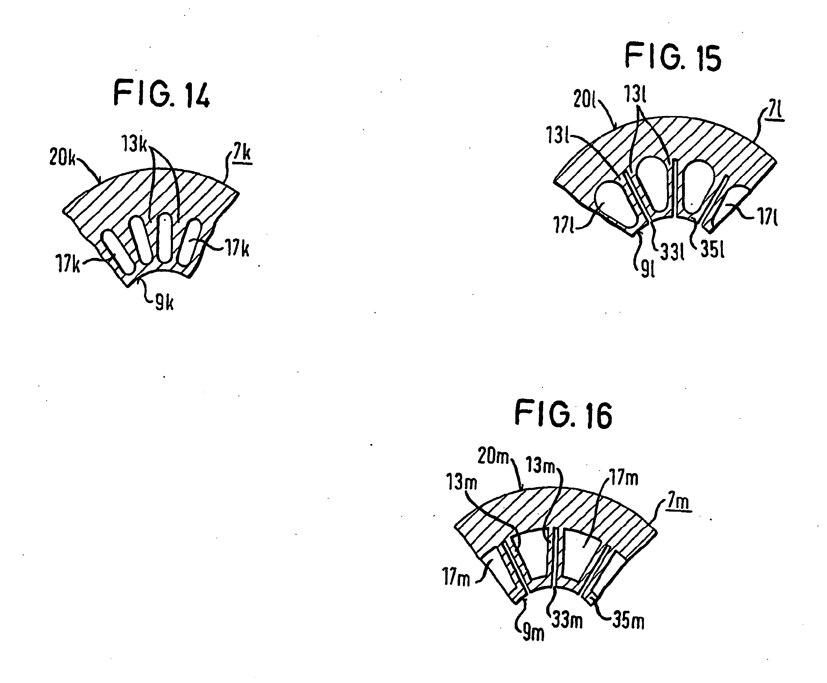

Fig. 14 zeigt eine Variante mit Kammern 17k, welche in einem achsnormalen Schnitt betrachtet als im wesentlichen radial sich erstreckende längliche Schlitze ausgebildet sind. Dabei ist eine große Zahl von Zugspeichen 13k gebildet, beispielsweise zwischen 10 und 20.

Die Variante der Fig. 15 besitzt Kammern 17l, die in einem achsnormalen Querschnitt betrachtet annähernd eiförmig ausgebildet sind und sich nach radial innen hin verjüngen. Die den radial inneren Hülsenbereich segmentierenden Trennschnitte oder -schlitze 33l sind in Umfangsrichtung zwischen den Kammern 17l angeordnet und reichen in radialer Richtung bis weit in den Bereich zwischen benachbarten Kammern 17l hinein. Diese Gestaltung führt dazu, daß zwischen jedem Paar benachbarter Kammern 17l zwei jeweils durch einen Trennschlitz 33l getrennte Zugspeichen 13l gebildet sind und jedes der radial inneren Hülsensegmente 35l mit zwei Zugspeichen 13l verbunden ist.

Die Variante der Fig. 16 entspricht dem Ausführungsbeispiel der Fig. 15 mit dem Unterschied, daß die Kammern 17m statt eines ovalen Querschnitts einen sich nach radial innen hin verjüngenden, annähernd trapezförmigen Querschnitt besitzen.

Insbesondere bei den Membran-Lösungen der Fig. 2 bis 9, aber auch - unter Umständen in abgeschwächter Form - bei den thermischen Lösungen kann im Rotationsbetrieb des Werkzeughalters infolge der auftretenden Fliehkräfte eine geringfügige Wanderung der mittleren Bereiche der Brückenelemente nach radial außen auftreten, die zu einer stärkeren Krümmung der Brückenelemente führt. Umgekehrt zu den Verhältnissen beim Lösen des Preßsitzes führt diese Verformung der Brückenelemente zu einer nach radial innen gerichteten Druckbelastung der Zugspeichen, die die Fliehtendenz der Zugspeichen wenigstens teilweise aufhebt. Dieser Effekt kann sowohl bei Endhülsen mit annähernd kreisförmiger Außenumfangskontur (wie beispielsweise in den Fig. 2 und 4) als auch bei Endhülsen mit annähernd polygonaler Außenumfangskontur (wie beispielsweise in den Fig. 6 und 7) auftreten. Im letzteren Fall kann er unter Umständen sogar verstärkt auftreten. Der Effekt kann insbesondere so stark sein, daß die Fliehneigung der Zugspeichen überkompensiert und in eine verstärkte Pressung des Halteschafts des Werkzeugs umgesetzt wird. Die angesprochene Wanderbewegung der mittleren Bereiche der Brückenelemente kann durch eine geeignete Gestaltung der Brückenelemente noch verstärkt werden. Diesbezüglich wird nochmals auf Fig. 2 verwiesen. Man erkennt dort an dem in der Darstellung oberen Brückenelement 19 eine gestrichelt angedeutete Materialverdickung 57, die als zusätzliches Fliehgewicht wirkt und besonders starke Fliehkräfte im mittleren Bereich des Brückenelements 19 entstehen läßt. Zur Herstellung einer solchen ungleichmäßigen Massenverteilung des Brückenelements 19 sind selbstverständlich Alternativen zu der gezeigten Materialverdickung denkbar, beispielsweise die Anbringung eines gesonderten Gewichtskörpers.

Bei allen vorstehenden Werkzeughaltern wird entweder durch äußere Krafteinleitung oder durch äußere Wärmeeinleitung eine Zugwirkung an den Zugspeichen hervorgerufen, die zu einer radialen Ausdehnung der Endhülse und zu einer Aufhebung des Preßsitzes führt. Die Querschnittsform der Endhülse und die Gestaltung der Zugspeichen, Brückenelemente und Hohlkammern sind in weitem Umfang variabel. Abhängig von der Gestalt der Hohlkammern können beispielsweise die Zugspeichen in radialer Richtung stark unterschiedliche Länge und Position besitzen. Ebenso ist die Zahl der Zugspeichen und der Hohlkammern variierbar. Im Einzelfall wird die konkrete Gestaltung des Werkzeughalters unter anderem von der gewünschten Klemmkraft, von der gewünschten Stärke der radialen Aufweitung der Aufnahmeöffnung und vom Material des Spannschafts und dessen Verformungseigenschaften abhängen.

## Patentansprüche

1. Werkzeughalter für ein um eine Drehachse (3) drehbares Werkzeug, insbesondere ein Bohr-, Fräs- oder Reibwerkzeug, umfassend einen Spannschaft (1), der in einem endseitigen Schaftbereich (7) eine zur Drehachse (3) zentrische Aufnahmeöffnung (9) zur Aufnahme eines Halteschafts (11) des Werkzeugs aufweist, wobei am Umfangsmantel der Aufnahmeöffnung (9) Spannflächen zur Preßsitzhalterung des Halteschafts (11) des Werkzeugs angeordnet sind,
**dadurch gekennzeichnet,**
**daß** der endseitige Schaftbereich (7) des Spannschafts (1) in Umfangsrichtung verteilt mehrere Zugspeichen (13) aufweist, an welchen den Umfangsabstand zwischen den Zugspeichen (13) überbrückende Brückenelemente (19) angreifen, die Teil eines die Zugspeichen (13h) umschließenden, zugfest mit diesen insbesondere einstückig verbundenen Zugrings (20h) sind, der zur Ausübung einer im wesentlichen nach radial außen gerichteten, die Spannflächen radial auseinander spreizenden Zugkraft thermisch radial aufweitbar ist, wobei die zwischen den Angriffsstellen (25) der Brückenelemente (19) an den Zugspeichen (13) gemessene Sehnenlänge für die Zugkrafteinwirkung auf die Zugspeichen (13) vergrößerbar ist und die Aufnahmeöffnung (9) im entlasteten Zustand der Zugspeichen (13) im wesentlichen Kreisquerschnitt besitzt, und daß dem Werkzeughalter eine Heizeinrichtung (49h) zugeordnet ist, mittels welcher der Zugring (20h) zur Zugbelastung der Zugspeichen (13h) thermisch radial aufweitbar ist.

2. Werkzeughalter nach Anspruch 1, **dadurch gekennzeichnet, daß** in Umfangsrichtung zwischen zumindest einem Teil der Zugspeichen (13h) liegende Bereiche des Zugrings (20h) durch Isolierkammern (17h) von radial inneren Bereichen des endseitigen Schaftbereichs (7h) des Spannschafts thermisch getrennt sind.

3. Werkzeughalter nach Anspruch 1 oder 2, **dadurch gekennzeichnet, daß** ein die Spannflächen bildender radial innerer Umfangsbereich (15a) des Spannschafts in mehrere voneinander getrennte Umfangssegmente (35a) aufgeteilt ist, von denen jedes mit je mindestens einer Zugspeiche (13a) verbunden ist.

4. Werkzeughalter für ein um eine Drehachse (3) drehbares Werkzeug, insbesondere ein Bohr-, Fräs- oder Reibwerkzeug, umfassend einen Spannschaft (1), der in einem endseitigen Schaftbereich (7) eine zur Drehachse (3) zentrische Aufnahmeöffnung (9) zur Aufnahme eines Halteschafts (11) des Werkzeugs aufweist, wobei am Umfangsmantel der Aufnahmeöffnung (9) Spannflächen zur Preßsitzhalterung des Halteschafts (11) des Werkzeugs angeordnet sind,
**dadurch gekennzeichnet,**
**daß** der endseitige Schaftbereich (7) des Spannschafts (1) in Umfangsrichtung verteilt mehrere Zugspeichen (13) aufweist, auf die zur radialen Auseinanderspreizung der Spannflächen eine im wesentlichen nach radial außen gerichtete Zugkraft ausübbar ist, daß an den Zugspeichen (13) den Umfangsabstand zwischen diesen überbrückende Brückenelemente (19) angreifen, deren zwischen ihren Angriffsstellen (25) an den Zugspeichen (13) gemessene Sehnenlänge bei Zugkrafteinwirkung auf die Zugspeichen (13) vergrößerbar ist,
**daß** zumindest ein Teil der Brückenelemente (19) und deren Angriffsstellen (25) an den Zugspeichen (13) derart gestaltet sind, daß durch Einleitung einer Sehnenlängungskraft in Form einer im wesentlichen nach radial innen gerichteten Druckkraft in die Brückenelemente (19) die Zugspeichen (13) auf Zug belastbar sind, daß der endseitige Schaftbereich (7e) des Spannschafts ein Druckkammersystem (43e) enthält, welches zur Einleitung der Sehnenlängungskraft in die Brückenelemente (19e) an eine insbesondere hydraulische Druckmittelversorgung (45e) anschließbar ist, und das Druckkammersystem (43e) mindestens teilweise von den Brückenelementen (19e) begrenzt ist, und
**daß** die Aufnahmeöffnung (9) im entlasteten Zustand der Zugspeichen (13) im wesentlichen Kreisquerschnitt besitzt.

5. Werkzeughalter nach Anspruch 4, **dadurch gekennzeichnet; daß** mindestens ein Teil der Brückenelemente (19) als zur Drehachse (3) hin konkav gekrümmte Membranen (19) ausgebildet ist, welche durch annähernd radiale Druckbelastung abflachbar sind.

6. Werkzeughalter nach Anspruch 5, **dadurch gekennzeichnet, daß** die Krümmung der Membranen (19b) geringer als die eines zur Drehachse zentrischen Kreisbogens ist, welcher durch die Angriffsstellen der Membranen (19b) an den Zugspeichen (13b) hindurchgeht.

7. Werkzeughalter nach Anspruch 5 oder 6, **dadurch gekennzeichnet, daß** die Membranen (19) einstückig mit den Zugspeichen (13) verbunden sind.

8. Werkzeughalter nach Anspruch 5 oder 6, **dadurch gekennzeichnet, daß** die Membranen (19f) als gesonderte Einsetzteile ausgebildet sind, welche in Aufnahmekammern (17f) des endseitigen Schaftbereichs (7f) des Spannschafts unverlierbar gehalten sind.

9. Werkzeughalter nach einem der Ansprüche 4 bis 8, **dadurch gekennzeichnet, daß** in Umfangsrichtung verteilt drei, vier oder fünf Zugspeichen (13) vorgesehen sind.

10. Werkzeughalter nach einem der Ansprüche 1 bis 9, **dadurch gekennzeichnet, daß** die Brückenelemente (19) als Fliehgewichtselemente ausgebildet sind, welche bei Rotation des Spannschafts um die Drehachse (3) unter Zentrifugalkrafteinfluß eine der Fliehtendenz der Zugspeichen (13) entgegenwirkende, im wesentlichen nach radial innen gerichtete Druckkraft auf die Zugspeichen (13) ausüben.

11. Werkzeughalter nach Anspruch 10, **dadurch gekennzeichnet, daß** die Fliehgewichtselemente (19) dazu ausgebildet sind, bei Rotation des Spannschafts (1) um die Drehachse (3) unter Zentrifugalkrafteinfluß eine den Preßsitz des Halteschafts (11) des Werkzeugs verstärkende Druckkraft auf die Zugspeichen (13) auszuüben.

12. Werkzeughalter nach einem der Ansprüche 1 bis 11, **dadurch gekennzeichnet, daß** ein die Spannflächen bildender radial innerer Umfangsbereich (15a) des Spannschafts in mehrere voneinander getrennte Umfangssegmente (35a) aufgeteilt ist, von denen jedes mit je mindestens einer Zugspeiche (13a) verbunden ist.

13. Werkzeughalter nach einem der Ansprüche 1 bis 12, **dadurch gekennzeichnet, daß** der endseitige Schaftbereich (7) des Spannschafts (1) von einer ringförmig geschlossenen, insbesondere einstückigen Endhülse (7) gebildet ist, deren Innenumfangsmantel die Spannflächen bildet, und daß in die Endhülse (7) zur Bildung der Zugspeichen (13) in Umfangsrichtung verteilt eine Mehrzahl zumindest angenähert axial sich erstreckender, zum Außenumfangsmantel der Endhülse (7) radial insbesondere geschlossener Ausnehmungen (17) eingearbeitet sind.

14. Werkzeughalter nach Anspruch 13, **dadurch gekennzeichnet, daß** die Endhülse (7) gesondert von einem Grundkörper (27) des Spannschafts (1) hergestellt und fest mit diesem verbunden ist.

## Claims

1. Tool holder for a tool which can be rotated about an axis of rotation (3), in particular a drilling, milling or reaming tool, comprising a clamping shank (1) which, in an end shank region (7), has an accommodating opening (9) which is central in relation to the axis of rotation (3) and is intended for accommodating a retaining shank (11) of the tool, clamping surfaces for securing the retaining shank (11) of the tool with a press fit being arranged on the circumferential casing of the accommodating opening (9), **characterized in that** the end shank region (7) of the clamping shank (1) has a plurality of tension spokes (13) distributed in the circumferential direction, acting on which are bridge elements (19) which bridge the circumferential spacing between the tension spokes (13) and are part of a tension ring (20h) which encloses the tension spokes (13h), is connected in particular integrally thereto in a tension-resistant manner and can be thermally widened in the radial direction in order to exert an essentially radially outwardly directed tensile force which spreads the clamping surfaces apart radially from one another, the chord length measured between the points of attachment (25) of the bridge elements (19) to the tension spokes (13) being capable of being increased for subjecting the tension spokes (13) to the action of tensile force, and the accommodating opening (9) having an essentially circular cross section when the tension spokes (13) are relieved of loading, and **in that** the tool holder is assigned a heating device (49h) by means of which the tension ring (20h) can be thermally widened in the radial direction in order to subject the tension spokes (13h) to tensile loading.

2. Tool holder according to Claim 1, **characterized in that** regions of the tension ring (20h) which are located circumferentially between at least some of the tension spokes (13h) are thermally separated from radially inner regions of the end shank region (7h) of the clamping shank by insulating chambers (17h).

3. Tool holder according to Claim 1 or 2, **characterized in that** a radially inner circumferential region (15a) of the clamping shank, said region forming the clamping surfaces, is divided up into a plurality of separate circumferential segments (35a), of which each is connected to at least one tension spoke (13a) in each case.

4. Tool holder for a tool which can be rotated about an axis of rotation (3), in particular a drilling, milling or reaming tool, comprising a clamping shank (1) which, in an end shank region (7), has an accommodating opening (9) which is central in relation to the axis of rotation (3) and is intended for accommodating a retaining shank (11) of the tool, clamping surfaces for securing the retaining shank (11) of the tool with a press fit being arranged on the circumferential casing of the accommodating opening (9), **characterized in that** the end shank region (7) of the clamping shank (1) has a plurality of tension spokes (13) distributed in the circumferential direction, it being possible for said tension spokes to be subjected to an essentially radially outwardly directed tensile force in order for the clamping surfaces to be spread apart radially from one another, **in that** acting on the tension spokes (13) are bridge elements (19) which bridge the circumferential spacing between the latter and of which the chord length measured between the points of attachment (25) of the bridge elements to the tension spokes (13) can be increased when the tension spokes (13) are subjected to the action of tensile force;
**in that** at least some of the bridge elements (19) and the points of attachment (25) of the latter to the tension spokes (13) are configured such that the tension spokes (13) can be subjected to tensile loading by virtue of a chord-lengthening force in the form of an essentially radially inwardly directed compressive force being introduced into the bridge elements (19),
**in that** the end shank region (7e) of the clamping shank contains a pressure-chamber system (43e) which in order for the chord-lengthening force to be introduced into the bridge elements (19e), can be connected to an in particular hydraulic pressure-medium supply (45e), and the pressure-chamber system (43e) is bounded at least in part by the bridge elements (19e), and
**in that** the accommodating opening (9) has an essentially circular cross section when the tension spokes (13) are relieved of loading.

5. Tool holder according to Claim 4, **characterized in that** at least some of the bridge elements (19) are designed as membranes (19) which are curved concavely in the direction of the axis of rotation (3) and can be flattened by more or less radial compressive loading.

6. Tool holder according to Claim 5, **characterized in that** the curvature of the membranes (19b) is smaller than that of a circle arc which is central in relation to the axis of rotation and passes through the points of attachment of the membranes (19b) to the tension spokes (13b).

7. Tool holder according to Claim 5 or 6, **characterized in that** the membranes (19) are connected integrally to the tension spokes (13).

8. Tool holder according to Claim 5 or 6, **characterized in that** the membranes (19f) are designed as separate insert parts which are retained in captive fashion in accommodating chambers (17f) of the end shank region (7f) of the clamping shank.

9. Tool holder according to one of Claims 4 to 8, **characterized in that** three, four or five tension spokes (13) are distributed in the circumferential direction.

10. Tool holder according to one of Claims 1 to 9, **characterized in that** the bridge elements (19) are designed as centrifugal-weight elements which, when the clamping shank rotates about the axis of rotation (3), under the influence of centrifugal force, subject the tension spokes (13) to an essentially radially inwardly directed compressive force which counteracts the centrifugal tendency of the tension spokes (13).

11. Tool holder according to Claim 10, **characterized in that** the centrifugal-weight elements (19) are designed such that, when the clamping shank (1) rotates about the axis of rotation (3), under the influence of centrifugal force, they subject the tension spokes (13) to a compressive force which enhances the press fit of the retaining shank (11) of the tool.

12. Tool holder according to one of Claims 1 to 11, **characterized in that** a radially inner circumferential region (15a) of the clamping shank, said region forming the clamping surfaces, is divided up into a plurality of separate circumferential segments (35a), of which each is connected to at least one tension spoke (13a) in each case.

13. Tool holder according to one of Claims 1 to 12, **characterized in that** the end shank region (7) of the clamping shank (1) is formed by an annularly closed, in particular, single-piece end sleeve (7), of which the inner circumferential casing forms the clamping surfaces, and **in that**, distributed in the circumferential direction, a plurality of at least more or less axially extending cutouts (17), which are in particular closed radially in relation to the outer circumferential casing of the end sleeve (7), are made in the latter in order to from the tension spokes (13).

14. Tool holder according to Claim 13, **characterized in that** the end sleeve (7) is produced separately from a basic body (27) of the clamping shank (1) and is firmly connected thereto.

## Revendications

1. Porte-outil destiné à un outil rotatif autour d'un axe de rotation (3), en particulier un outil de perçage, de fraisage ou d'alésage, comprenant une tige de serrage (1), qui comporte dans une zone d'extrémité (7) un orifice de réception (9) centré par rapport à l'axe de rotation (3), destiné à recevoir une tige de retenue (11) de l'outil, des surfaces de serrage étant agencées sur la paroi périphérique de l'orifice de réception (9) pour un ajustement serré de la tige de retenue (11) de l'outil,
**caractérisé en ce que**
la zone d'extrémité (7) de la tige de serrage (1) comporte plusieurs rayons de traction (13) répartis sur le pourtour, sur lesquels viennent en prise des éléments formant des ponts (19) en couvrant la distance périphérique entre les rayons de traction (13), éléments qui font partie d'une bague de traction (20h) entourant les rayons de traction (13h) et reliée en particulier d'un seul tenant à ceux-ci de manière résistante à la traction, bague qui peut être expansée radialement sous l'effet thermique pour exercer une traction, sensiblement dans la direction radiale et vers l'extérieur, écartant radialement les surfaces de serrage les unes par rapport aux autres, la longueur de corde mesurée entre les points de prise (25) des éléments formant ponts (19) sur les rayons de traction (13) pouvant être agrandie sous l'effet d'une force de traction exercée sur les rayons de traction (13), et l'orifice de réception (9), lorsque les rayons de traction (13) ne sont pas sollicités, présentant une section transversale sensiblement circulaire, et **en ce qu'**un dispositif de chauffage (49h) est associé au porte-outil, au moyen duquel la bague de traction (20h) peut être expansée radialement sous l'effet thermique pour exercer la traction sur les rayons de traction (13h).

2. Porte-outil selon la revendication 1, **caractérisé en ce qu'**une séparation thermique formée par des cavités isolantes (17h) est réalisée entre des zones de la bague de traction (20h), situées dans le sens périphérique entre au moins une partie des rayons de traction (13h), et des zones radialement vers l'intérieur de la zone d'extrémité (7h) de la tige de serrage.

3. Porte-outil selon la revendication 1 ou 2, **caractérisé en ce qu'**une zone périphérique (15a) radialement intérieure et formant les surfaces de serrage, sur la tige de serrage est divisée en plusieurs segments périphériques (35a) séparés les uns des autres, dont chacun est relié respectivement avec au moins un rayon de traction (13a).

4. Porte-outil destiné à un outil rotatif autour d'un axe de rotation (3), en particulier un outil de perçage, de fraisage ou d'alésage, comprenant une tige de serrage (1), qui comporte dans une zone d'extrémité (7) un orifice de réception (9) centré par rapport à l'axe de rotation (3), destiné à recevoir une tige de retenue (11) de l'outil, des surfaces de serrage étant agencées sur la paroi périphérique de l'orifice de réception (9) pour un ajustement serré de la tige de retenue (11) de l'outil,
**caractérisé en ce que**
la zone d'extrémité (7) de la tige de serrage (1) comporte plusieurs rayons de traction (13) répartis sur le pourtour, sur lesquels une force de traction, dirigée sensiblement radialement vers l'extérieur peut être exercée en vue d'écarter radialement les surfaces de serrage les unes par rapport aux autres, **en ce que** des éléments formant des ponts (19) viennent en prise sur les rayons de traction (13) en couvrant la distance périphérique entre ceux-ci, dont la longueur de corde mesurée entre leurs points de prise (25) sur les rayons de traction (13) peut être agrandie sous l'effet d'une force de traction exercée sur les rayons de traction (13),
**en ce qu'**au moins une partie des éléments formant des ponts (19) et leurs points de prise (25) sur les rayons de traction (13) sont réalisés de telle sorte que, par une force d'allongement de corde, en particulier sous la forme d'une force de pression dirigée sensiblement radialement vers l'intérieur, exercée sur les éléments formant des ponts (19), les rayons de traction (13) peuvent être sollicités par traction, **en ce que** la zone d'extrémité (7e) de la tige de serrage comporte un système de chambre de pression (43e), qui peut être raccordé à une source de milieu sous pression (45e), en particulier un système hydraulique, en vue d'appliquer la force d'allongement de corde dans les éléments formant des ponts (19e) et le système de chambre de pression (43e) est délimité au moins en partie par les éléments formant des ponts (19e), et
**en ce que** l'orifice de réception (9), lorsque les rayons de traction (13) ne sont pas sollicités, présente une section transversale sensiblement circulaire.

5. Porte-outil selon la revendication 4, **caractérisé en ce qu'**au moins une partie des éléments formant des ponts (19) sont réalisés sous la forme de membranes (19) à courbure concave par rapport à l'axe de rotation (3), lesquelles peuvent être aplanies sous l'effet d'une sollicitation de pression pratiquement radiale.

6. Porte-outil selon la revendication 5, **caractérisé en ce que** la courbure des membranes (19b) est inférieure à celle d'un arc de cercle centré par rapport à l'axe de rotation, lequel traverse les points de prise des membranes (19b) sur les rayons de traction (13b).

7. Porte-outil selon la revendication 5 ou 6, **caractérisé en ce que** les membranes (19) sont reliées d'un seul tenant avec les rayons de traction (13).

8. Porte-outil selon la revendication 5 ou 6, **caractérisé en ce que** les membranes (19f) sont réalisées sous la forme d'éléments séparés, qui sont maintenus de manière imperdable dans des cavités de réception (17f) dans la zone d'extrémité (7f) de la tige.

9. Porte-outil selon l'une des revendications 4 à 8, **caractérisé en ce qu'**il est prévu trois, quatre ou cinq rayons de traction (13) répartis dans le sens périphérique.

10. Porte-outil selon l'une des revendications 1 à 9, **caractérisé en ce que** les éléments formant ponts (19) sont conformés en masselottes qui, au moment de la rotation de la tige de serrage autour de l'axe de rotation (3), sous l'effet de la force centrifuge, exercent sur les rayons de traction (13), une force de pression allant à l'encontre de la tendance centrifuge des rayons de traction (13) et orientée sensiblement radialement vers l'intérieur.

11. Porte-outil selon la revendication 10, **caractérisé en ce que** les masselottes (19) sont réalisées en vue d'exercer sur les rayons de traction (13), sous l'effet de la force centrifuge, une force de pression renforçant l'ajustement serré de la tige de retenue (11) de l'outil au moment de la rotation de la tige de serrage (1) autour de l'axe de rotation (3).

12. Porte-outil selon l'une des revendications 1 à 11, **caractérisé en ce qu'**une zone périphérique (15a) radialement intérieure et formant les surfaces de serrage, sur la tige de serrage est divisée en plusieurs segments périphériques (35a) séparés les uns des autres, dont chacun est relié respectivement avec au moins un rayon de traction (13a).

13. Porte-outil selon l'une des revendications 1 à 12, **caractérisé en ce que** la zone d'extrémité (7) de la tige de serrage (1) est formée par un embout (7), en particulier en une seule pièce, fermé en forme d'anneau, dont la paroi périphérique intérieure forme les surfaces de serrage, et **en ce qu'**une pluralité d'évidements (17), répartis dans le sens périphérique en s'étendant au moins approximativement dans le sens axial et étant en particulier fermés radialement par rapport à la paroi périphérique extérieure de l'embout (7), sont ménagés dans l'embout (7) afin de former les rayons de traction (13).

14. Porte-outil selon la revendication 13, **caractérisé en ce que** l'embout (7) est réalisé séparément du corps de base (27) de la tige de serrage (1) et est assemblé de manière inamovible à celui-ci.
